# EUROPÄISCHE PATENTSCHRIFT

(11) **EP 0 977 982 B1**
(45) Veröffentlichungstag und Bekanntmachung des Hinweises auf die Patenterteilung: **13.11.2002**
(21) Anmeldenummer: 98913977.9
(22) Anmeldetag: 23.04.1998
(51) Int. Cl.: G01N 21/89, G01B 11/24, G02B 26/12

(54) **SENSOREINHEIT, VORRICHTUNG UND VERFAHREN ZUR INSPEKTION DER OBERFLÄCHE EINES OBJEKTES**
SENSOR UNIT, PROCESS AND DEVICE FOR INSPECTING THE SURFACE OF AN OBJECT
UNITE DE DETECTION, PROCEDE ET DISPOSITIF D'INSPECTION DE LA SURFACE D'UN OBJET

(30) Priorität: 25.04.1997 DE 19717488
(43) Veröffentlichungstag der Anmeldung: 09.02.2000
(73) Patentinhaber: Baumer Optronic GmbH, 01454 Radeberg/bei Dresden (DE)
(72) Erfinder: WOLLMANN, Christian, D-01465 Liegau (DE); WENERT, Lutz, D-01474 Weissig (DE); IHLEFELD, Joachim, D-01019 Dresden (DE); GRIESER, Ralf, D-01097 Dresden (DE)
(74) Vertreter: Frei, Alexandra Sarah
(86) Internationale Anmeldenummer: IB9800614
(87) Internationale Veröffentlichungsnummer: WO98049545

(56) Entgegenhaltungen:
- EP-A- 0 387 521
- EP-A- 0 408 920
- EP-A- 0 701 116
- EP-A- 0 786 643
- WO-A-93/11403
- WO-A-95/24636
- US-A- 3 976 384
- US-A- 4 286 880
- PATENT ABSTRACTS OF JAPAN vol. 8, no. 141 (P-283), 30.Juni 1984 & JP 59 040149 A (MATSUSHITA DENKO KK), 5.März 1984,
- PATENT ABSTRACTS OF JAPAN vol. 009, no. 137 (P-363), 12.Juni 1985 & JP 60 019117 A (NIPPON DENKI KK), 31.Januar 1985,

## Beschreibung

Die Erfindung betrifft eine Vorrichtung und ein Verfahren zur Inspektion der Oberfläche eines Objektes gemäss den Oberbegriffen der unabhängigen Patentansprüche.

Zur Oberflächeninspektion von Werkstoffen ist es bekannt, mit CCD-Zeilen- oder Matrix-Kameras sowie mit Laserscannern die betreffende Oberfläche abzutasten und mit Bildverarbeitungsmitteln Grauwertbilder bzw. Farbbilder zu analysieren.

Bei der Verarbeitung von Hölzern, beispielsweise im Tür- und Fensterbau oder bei der Herstellung von Furnieren, ist es notwendig, die zu verarbeitenden Hölzer auf ihre Qualität hin zu untersuchen. Dabei muss bspw. festgestellt werden, ob die Hölzer Risse, Astlöcher oder Überhöhungen oder Vertiefungen aufweisen oder ob sie von Blau- oder Rotfäule befallen sind, die sie für den vorgesehenen Einsatzzweck unbrauchbar machen. Bis heute werden deshalb solche Inspektionen von Hölzern weitestgehend von Personen durchgeführt. Insbesondere ist es bis heute praktisch nicht möglich, Hölzer automatisch auszusortieren bzw. zu klassifizieren, die von Blaufäule oder Rotfäule befallen sind. Ferner gibt es eine Reihe von technischen Problemen, die allgemein mit der prozessbedingten hohen Tiefenschärfe und gleichzeitig hohen Auflösung sowie Transportgeschwindigkeit des Holzes zusammenhängen. Dafür sind relativ aufwendige Beleuchtungseinrichtungen mit sehr hoher Leistung notwendig.

Bei der Beleuchtung von Holz mittels eines Laserstrahls tritt der sogenannte Scatter-Effekt auf, was bedeutet, dass ein Teil des Lichtes in die Holzfasern eingekoppelt wird und sich dort in Abhängigkeit von der lokalen Dichteverteilung in der Nähe der Oberfläche ausbreitet. Bei einem ungestörten Faserverlauf zeigt sich in der räumlichen Intensitätsverteilung des remittierten Lichts eine charakteristische Dipolverteilung, wobei der (1/e)-Abfall, die integrale Intensität sowie die reale Struktur der Emissionsmaxima von der Art des Materials bzw. von der Struktur der Störung abhängig ist. Durch die SE-A-7500465-5 ist ein Verfahren und eine Vorrichtung unter Verwendung eines Helium-Neon-Lasers bekannt geworden, bei dem der Scatter-Effekt in indirekter Weise zur Auswertung herangezogen wird.

Durch die EP-0 198 037 B1 ist ein Verfahren zum Messen von Faserwinkeln in einem faserartigen Material, wie Holz, bekannt geworden, bei welchem ein Bereich auf der Oberfläche des Materials mit einem einfallenden Lichtstrahl beleuchtet wird und fotoempfindliche Vorrichtungen räumlich so angeordnet werden, dass sie das von dem beleuchteten Bereich reflektierte Licht messen. Der Faserwinkel wird relativ zu drei zueinander senkrechten Referenzachsen (x, y, z) gemessen und ein beliebiger Punkt auf der Oberfläche des Materials als Ursprungspunkt der Achsen bestimmt. Der beleuchtete Bereich umfasst den Ursprungspunkt und hat einen Durchmesser, der mindestens zehnmal so gross ist wie der durchschnittliche Faserdurchmesser der zu messenden Substanz. Eine Mehrzahl von fotoempfindlichen Vorrichtungen ist dergestalt angeordnet, um die azimutalen Winkelpositionen um den Ursprungspunkt des Intensitätsmaximums des reflektierten Lichts abschätzen zu können. Des weiteren wird eine Reihe von beliebigen Punkten quer und längs eines Bereichs auf der Oberfläche des Materials abgespannt, um die azimutalen Winkelpositionen der Intenatätsmaxima bei jedem der Punkte abschätzen zu können. Mittels der Beziehung zwischen azimutaler Winkelposition der reflektieren Lichtmaxima und dem Faserwinkel wird, relativ zu allen drei Achsen für jeden Messpunkt der entsprechende Faserwinkel berechnet, um das gesamte Faserwinkelmuster in dem gemessenen Bereich des faserartigen Materials anzuzeigen. Zur Durchführung dieses Verfahrens ist eine höchst aufwendige Apparatur notwendig, um einerseits den Strahlanteil des reflektierten Lichts und andererseits den Anteil des diffus remittierten Lichts zu messen.

Durch die DE-A-196 04 076.0 ist Vorrichtung zur Inspektion der Oberfläche von Holz zwecks Feststellung von Oberflächenmerkmalen vorgeschlagen worden, bestehend aus einem opto-elektrischen Sensor, einer elektronischen und/oder optischen Verarbeitungseinheit, einem echtzeitfähigen Rechner, wobei das Holz relativ zum Sensor bewegbar ist sowie einem Inkrement gebenden Sensor der mit der Geschwindigkeit des Holzes synchronisiert ist. Der Sensor besteht aus einem Farb-Laserscanner mit wenigstens zwei Strahlbündeln unterschiedlicher Wellenlänge und einem Empfänger mit zwei Kanälen mit je einem opto-elektrischen Empfangselement, wobei die Kanäle durch Strahlteilung des remittierten Strahlenbündels gebildet werden und wenigstens in einem der Kanäle ein Objektiv zum Erzeugen einer Zwischenbildebene angeordnet ist Nach dem Objektiv innerhalb des einen Kanals befindet sich ein optisches Verkaufsfilter, welches den passierenden Lichtstrom auf das zugehörige optoelektrische Empfangselement ortsabhängig zu modulieren imstande ist. Die Signale des Empfangselements des einen Kanals ohne Verkaufsfilter werden im Rechner in ein Farbbild und diejenigen des anderen Kanals, dessen Lichtstrom ortsabhängig moduliert worden ist, in ein Profilbild der Oberfläche gewandelt.

Es ist bspw. aus den Schriften US-4,286,880 oder JP 59 040 149 A bekannt, Holzoberflächen durch Abtasten mit einem Lichtstrahl zu untersuchen. Diese beiden Schriften offenbaren einen rotierenden Spiegel, welcher im Brennpunkt eines Parabolspiegels angeordnet ist; Licht wird von einer Lichtquelle auf den rotierenden Spiegel ausgesandt und von diesem aus durch Reflexion am Parabolspiegel auf einer Abtastlinie auf der Holzoberfläche verteilt. In der US-4,286,880 geht es um eine Verbesserung von Arbeitsstationen zur Lokalisierung von Holzdefekten, bei welchen Arbeitsstationen eine Bedienungsperson die Defekte finden muss. Die Bedienungsperson markiert die Defekte, und die Markierungen werden von einem optischen Sensor mit einem binären Ausgangssignal detektiert. Aufgabe der JP 59 040 149 A ist das Detektieren von eingewachsenen Ästen mittels asymmetrisch gestreuten Lichtes. Zur Lösung dieser Aufgabe wird eine Holzoberfläche von einem Lichtstrahl abgetastet, und von der Holzoberfläche gestreutes Licht wird durch zwei symmetrisch bezüglich des Abtaststrahls angeordnete Detektoren direkt detektiert.

Aus dem Stand der Technik sind auch optische Abstandssensoren bekannt. Der in der Schrift EP-0 387 521 A2 offenbarte Abstandssensor beruht auf einem Triangulationsverfahren. Ein Lichtstrahl wird durch ein Objektiv auf die zu vermessende Oberfläche fokussiert. Von der Oberfläche gestreutes Licht wird vom selben Objektiv gesammelt und von einem Hohlspiegel auf ortsempfindliche Detektoren fokussiert. Die Bauteile sind derart in Bezug auf eine optische Achse angeordnet, dass hohe Lichtempfindlichkeit durch einen geringen Einfallswinkel gewährleistet ist. Ein anderer Abstandssensor ist in der Schrift WO 93/11403 offenbart. Er enthält einen rotierenden Polygonspiegel, welcher von einer Lichtquelle ausgesandtes auf eine Abtastzeile auf der zu vermessenden Oberfläche verteilt wird. Ein Scanobjektiv bildet die punktförmige Lichtquelle auf die Oberfläche ab. Das von der Oberfläche reflektierte Licht wird mit demselben Scanobjektiv und einer weiteren Linse auf einen punktförmigen Detektor abgebildet; dieser Aufbau wird in D1 als "konfokal" bezeichnet. Nur wenn das Objekt in der Brennebene des Scanobjektivs und gleichzeitig der Detektor in der Brennebene der weiteren Linse liegen, trifft auf den Detektor maximale Lichtintensität. Die detektierte Lichtintensität ist also ein Mass für den Abstand des Objektes vom Scanobjektiv. Der Aufbau kann verfeinert werden, indem mehrere Detektoren vorgesehen werden, welche bei unterschiedlichen Objektabständen maximale Signale liefern.

Der Erfindung liegt die Aufgabe zugrunde, eine Vorrichtung und ein Verfahren zur dynamischen Inspektion der Oberfläche von Objekten wie Hölzern, Kacheln, Textilien oder Gläsern anzugeben, zwecks Feststellung von Oberflächenmerkmalen, mit der eine selbsttätige Inspektion der Oberfläche fortlaufend und mit grosser Geschwindigkeit durchgefuhrt werden kann und mit der Merkmale wie Risse, Astlöcher, Überhöhungen, Vertiefungen, bei Holz ebenso Blaufäule oder Rotfäule, unter Ausnutzung des Scatter-Effekts sicher erkannt werden sollen. Insbesondere soll die erfindungsgemässe Sensoreinheit dasjenige Licht, welches von der Lichtquelle her kommt, von demjenigen Licht, welches vom Objekt kommt und wichtige Information trägt, entkoppeln. Die Vorrichtung soll daneben einfach aufgebaut und kostengünstig herstellbar sein.

Die Aufgabe wird gelöst durch die erfindungsgemässe Vorrichtung und das erfindungsgemässe Verfahren, wie sie in den unabhängigen Patentansprüchen definiert sind.

Die erfindungsgemässe optische Sensoreinheit zum Senden von Licht in eine Abtasteinrichtung und zum Empfangen von aus der Abtasteinrichtung einfallendem Licht enthält ein Licht aussendendes Sendermodul und ein Licht empfangendes Empfängermodul. Die Sensoreinheit weist ein optisches Ablenkelement auf, durch welches von der Abtasteinrichtung einfallendes Licht in zwei voneinander verschiedene Strahlengänge aufteilbar ist. Ein erster Strahlengang ist durch einen ersten räumlich begrenzten Teil des einfallenden Lichtes definiert und ein zweiter Strahlengang ist durch einen zweiten räumlich begrenzten Teil des einfallenden Lichtes definiert, wobei der erste räumlich begrenzte Teil eine kleinere Querschnittfläche aufweist als der zweite räumlich begrenzte Teil. Dabei liegt das Sendermodul im ersten Strahlengang und das Empfängermodul im zweiten Strahlengang.

Die erfindungsgemasse Vorrichtung zur Inspektion einer Oberfläche eines Objektes zwecks Feststellung von Oberflächenmerkmalen beinhaltet eine erfindungsgemässe Sensoreinheit, wobei vorzugsweise das Objekt relativ zur Sensoreinheit bewegbar ist. Ferner beinhaltet die Vorrichtung eine Abtasteinrichtung, zu welcher Licht von der Sensoreinheit gesendet wird, wobei die Abtasteinrichtung einen Hohlspiegel, in dessen Brennpunkt ein von der Sensoreinheit beleuchtbares Lichtumlenkelement mit zeitabhängigem Umlenkwinkel angeordnet ist, so dass das von der Sensoreinheit ausgesandte Licht längs einer Abtastzeile über das Objekt führbar ist und vom Objekt remittiertes Licht von der Abtasteinrichtung in die Sensoreinheit einfällt.

Eine bevorzugte Ausführungsform der erfindungsgemässen Vorrichtung ist gekennzeichnet durch einen Parabolspiegel, in dessen Brennpunkt ein sich drehendes Polygonspiegelrad angeordnet ist, auf welches das Strahlbundel des Lasers mittels einer telezentrischen Optik gerichtet ist, die Sender- und Empfangerstrahl auf der gleichen optischen Achse führt, wobei der Parabolspiegel das umgelenkte Strahlbündel unter einem gleichbleibenden Winkel bezüglich der Symmetrieachse des Parabolspiegels längs einer Abtastzeile über das Objekt führt und das vom Objekt remittierte Strahlbundel auf demselben Weg zurückgeleitet und nach seiner Ausspiegelung aus dem gemeinsamen Strahlengang auf die Verarbeitungseinheit fällt.

Die Vorrichtung beruht auf der Tatsache des sogenannten Tracheid-Effektes (Scatter-Effekt), der bei Dichteänderungen an der Oberfläche bei einer Reihe von Materialien bei punktförmiger, vorzugsweise kohärenter, Beleuchtung auftritt. Dabei tritt durch die Oberfläche hindurch Licht in das Material ein und wird innerhalb des Materials geleitet, wobei die Lichtleitung und deren Dämpfung durch die Materialstruktur festgelegt sind. Die Vorrichtung und das Verfahren sind imstande, den Scatter-Effekt zur Auswertung von Oberflächenanomalien heranzuziehen und unter Echtzeitbedingungen eine Beurteilung derartiger Oberflächenstörungen durchzuführen.

Im Strahlengang zwischen dem Laser und dem Polygonspiegelrad befindet sich vorzugsweise ein Spiegel mit einer Öffnung oder einem Loch, durch welches das eingestrahlte Strahlbündel hindurch auf das Polygonspiegelrad fällt, wobei der Spiegel das remittierte Strahlbündel unter einem gegebenen Winkel auf ein Objektiv lenkt, in dessen Bildebene sich die optischen Detektoren und die elektronische Verarbeitungseinheit vorzugsweise einschliesslich echtzeitfähigem Rechner befinden. Nach dem Objektiv und vor der Bildebene desselben werden durch Strahlteilung in zwei Teilstrahlenbündel vorzugsweise wenigstens zwei Kanäle gebildet. die getrennt ausgewertet werden. Für das Funktionieren der Vorrichtung ist hohe Präzision der Ausführung wichtig.

Handelt es sich beispielsweise bei dem zu inspizierenden Material um Holz, so bilden sich um den intensiven Lichtpunkt der direkten Einstrahlung zwei sich entsprechend der Dipolcharakteristik nach aussen verjüngende Keulen entlang der Faserrichtung aus, die sich an den direkten Lichtpunkt des auftreffenden Strahls anschliessen. Entsprechend der Änderung der Oberflächenstruktur und dem Faserverlauf verändern sich die beiden Keulen in ihrer Länge, Helligkeit und Richtung. Die Helligkeit, Länge sowie Richtung hängen von der örtlichen Störung und deren Ausgestaltung sowie dem Faserverlauf ab Insbesondere haben die Erfinder erkannt, dass durch den Scatter-Effekt zum ersten Mal bei Hölzern gerade beginnende Blaufäule oder Rotfäule sichtbar gemacht werden kann, lange bevor der Befall mit blossem Auge auszumachen ist, sondern nur aufgrund chemischer Analysen oder mikroskopischer Betrachtung nachgewiesen werden kann. Ebenso zeigen sich aufgrund des Scatter-Effekts im Holz Störungen, wie zum Beispiel Astlöcher. Druckholz oder Blaufäule, die zu einer Qualitätsminderung des betreffenden Holzes führen.

Zur Gewinnung eines Oberflächenprofils (3D-Profil) durch Lichtschnittverfahren (Triangulation) ist mindestens ein von der Sensoreinheit ausgesandter Lichtstrahl auf das Objekt lenkbar. Unter einem endlichen Winkel bezüglich des einfallenden Strahls vom Objekt remittiertes Licht ist dergestalt zur Sensoreinheit zurückführbar, dass der einfallende und der zurückgeführte Lichtstrahl in einer Ebene parallel zur Objektoberfläche im wesentlichen deckungsgleich sind In einer Variante können auch mehrere, vorzugsweise zwei. Laserstrahlen über verschiedene zueinander versetzte Spiegel lenkbar sein dergestalt, dass die einzelnen Laserstrahlen in der horizontalen Objektebene deckungsgleich sind, wahrend in der vertikalen Objektebene ein konstanter Winkel gegeben ist, um das Oberflachenprofil durch die vertikale Ablage des remittierten Laserlichts mit einem positionsempfindlichen opto-elektrischen Empfangselement, welches insbesondere ein hochgeschwindigkeitsfähiges PSD-Sensorelement ist, zu vermessen.

In einer bevorzugten Ausführungsform der Erfindung wird zur Gewinnung eines 3D-Oberflächenprofils durch Triangulation mindestens ein Laserstrahl auf die Oberfläche des Objektes fokussiert. Die vertikale Ablage des remittierten Laserlichtes wird über einen zrsätzlichen lenkbaren Spiegel unter konstantem Winkel mit einem hochgeschwindigkeitsfähigen positionsempfindlichen Empfangselement (PSD) vermessen.

Das erfindungsgemässe Verfahren zur Inspektion einer Oberfläche eines Objektes zwecks Feststellung von Oberflächenmerkmalen verwendet eine erfindungsgemässe Sensoreinheit, welche Licht zu einer Abtasteinrichtung sendet, wobei vorzugsweise das Objekt relativ zur Sensoreinheit bewegt wird. Das ausgesandte Licht wird mittels einer telezentrischen Abbildung auf das Objekt fokussiert und unter einem gleichbleibenden Winkel bezüglich des abzutastenden Objektes bzw. der Normalen der Transportoberfläche längs einer Abtastzeile über das Objekt geführt. Vom Objekt remittiertes Licht wird auf demselben Strahlengang wie das ausgesandte Licht in die Sensoreinheit zuruckgeführt.

In einer bevorzugten Ausführungsform des erfindungsgemassen Verfahrens wird der Laserstrahl durch eine telezentrische Abbildung, die Sender- und Empfängerstrahl auf der gleichen optischen Achse führt, auf das Objekt fokussiert und bezüglich des abzutastenden Objekts immer unter einem gleichbleibenden Winkel bezüglich des abzutastenden Objekts bzw bezüglich der Normalen der Transportoberfläche des Objektes längs einer Abtastzeile geführt, was sich am effektivsten durch die Anordnung eines Parabolspiegels verwirklichen lässt, in dessen Brennpunkt bzw. Brennpunktbereich sich ein Polygonspiegelrad befindet, so dass in diesem Fall der Winkel des Laserstrahls bezuglich der Symmetrieachse des Parabolspiegels konstant ist. Die räumliche Auflösung ist dabei allein durch die Fokussierbarkeit des Laserlichts begrenzt. Das telezentrische Strahlenbündel des wanderden Laserlichtpunktes, der Messpunkt, längs einer Abtastzeile, braucht nicht orthogonal auf die abzutastende Oberfläche auftreffen, sondern der Auftreffwinkel kann in weiten Bereichen beliebig sein, hat jedoch konstant zur Normalen der Transportoberfläche des Objektes zu sein. Das remittiente Licht wird dabei durch das gleiche Abbildungssystem zurück zum Detektor geführt.

Gemäss dem Verfahren können in Echtzeit, vorzugsweise unter Verwendung von parallelen Prozessoren, verschiedene Oberflächenmerkmale gemessen werden, nämlich insbesondere:
a) die Intensitätsverteilung des diffus reflektierten Laserlichts und/oder
b) die Verteilung der Intensität des durch lokale Dichteänderungen gestreuten Laserlichts (Tracheid-Effekt), was durch Raumfilter im Scatter-Kanal beobachtet wird und/oder
c) das Höhenprofil (3D-Kanal) der Oberfläche, welches mittels eines Triangulationsverfahrens gemessen wird und/oder
d) doppelbrechende Eigenschaften, welche durch polarisationsabhängige Detektionsverfaliren vermessen werden, beispielsweise mittels eines Analysators parallel und antiparallel zur Oberflächenrichtung.

Nach dem Objektiv und vor der Bildebene desselben werden durch Strahlteilung in zwei Teilstrahlenbündel wenigstens zwei Kanäle gebildet, die gewertet werden. Grundsätzlich ist es sogar möglich, alle oben genannten Merkmale mit nur einem Laser zu detektieren, was durch eine Modifikation des Empfängermoduls realisiert werden kann. Zur Aufteilung der remittierten Laserstrahlung in Teilstrahlungsbündel entsprechend ihrer unterschiedlichen Wellenlänge wird im Strahlengang der remittierten Strahlung ein dichroitischer Spiegel angeordnet, wobei aus den Teilstahlenbündeln unterschiedlicher Wellenlänge verschiedene Oberflachenmerkmale, wie insbesondere das Höhenprotil im 3D-Kanal, die Reflektivität in einem Rotlicht-Kanal sowie der Tracheid-Effekt im genannten Scatter-Kanal, simultan mit hoher Wiederholungsrate aufgenommen werden. Das eine der durch den dichroitischen Spiegel gebildete Teilstrahlungsbündel, vorzugsweise der Rotlichtanteil der remittierten Laserstrahlen, wird vorzugsweise nochmals in zwei Kanäle zerlegt, vorzugsweise durch einen halbdurchlässigen Spiegel, in denen entsprechend dem remittierten Laserlicht empfindliche Sensoren angeordnet sind, wobei innerhalb des einen Kanals das Abbild des direkt remittierten Lichtpunkts bzw -flecks auf dem Objekt ausgewertet und das Abbild der Keulen des Scatter-Effektes ausgeblendet wird und aus dem Abbild des Lichtpunkts bzw. -flecks ein Graustufenbild gewonnen wird, wohingegen innerhalb des anderen Kanals (Scatter-Kanal) durch spezielle Raumfilter der direkte remittierte Lichtpunkt bzw. -fleck ausgeblendet und nur das Abbild der verbleibenden Keulen ausgewertet wird. Die Ausblendung erfolgt mittels spezieller Raumfilter.

Das Tracheid-gestreute Laserlicht (Scatter-Kanal), welches zum Beispiel bei Holz zur Auswertung des Abbildes der verbleibenden Keulen dient, wird zum Sichtbarmachen von dichteabhangigen Oberflächenanomalien, wie Rissen, Sprüngen, Strukturstorungen, mittels eines Vierquadranten-Verfahrens, beispielsweise durch dichroitische Spiegel oder eine Vierquadrantendiode, ortsabhängig in der Ausprägung (Sₓ + S_{y})/S und in der Richtung arctan(Sₓ/S_{y}), gegebenenfalls in Kombination mit dem Triangulationsverfahren im 3D-Kanal auch höhenabhängig, in einem Echtzeitverfahren detektiert, dessen räumliches Auflösungsvermögen nur durch die Fokussierbarkeit des Laserlichts limitiert ist.

Im folgenden wird die Erfindung anhand der Figuren detailliert erläutert. Dabei zeigen schematisch
- Figur 1: einen Querschnitt durch eine erste Ausführungsform der erfindungsgemässen Sensoreinheit,
- Figur 2: einen Querschnitt durch eine zweite Ausführungsform der erfindungsgemässen Sensoreinheit,
- Figur 3: einen Querschnitt durch eine dritte Ausführungsform der erfindungsgemässen Sensoreinheit,
- Figur 4: eine Draufsicht auf ein Ablenkelement der Sensoreinheit von Fig. 3,
- Figur 5: eine schematische Anordnung der erfindungsgemassen Vorrichtung in Draufsicht,
- Figur 6: eine Draufsicht auf eine technische Ausführung der erfindungsgemässen Vorrichtung, bei welcher der Strahlengang zur Erreichung einer geringen Bautiefe gefaltet ist.
- Figur 7: eine Seitenansicht der Vorrichtung von Fig 6,
- Figur 8: eine Ansicht eines Empfängermoduls mit einem Raumfilter senkrecht zum Parabolspiegel im Scatterkanal und
- Figur 9: eine Ansicht des Empfänger moduls von Fig. 8 mit demselben Raumfilter parallel zum Parabolspiegel im Scatterkanal.

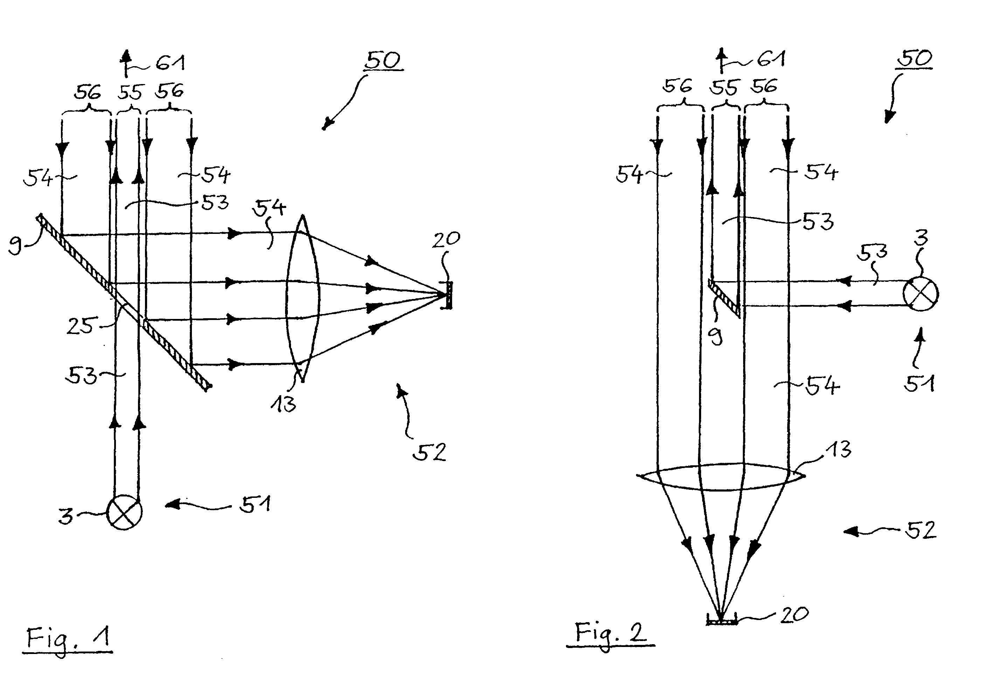

Figur 1 zeigt einen schematischen Querschnitt durch eine erste Ausführungsform der erfindungsgemassen Sensoreinheit 50. Die Sensoreinheit 50 dient zum Senden von Licht zu einer (in Fig. 1 nicht dargestellten) Abtasteinrichtung 60, welche in Richtung eines Pfeils 61 liegt, und zum Empfangen von von der Abtasteinrichtung 60 einfallendem Licht Die Sensoreinheit 50 enthält ein Licht aussendendes Sendermodul 51 und ein Licht empfangendes Empfängermodul 52. Das Sendermodul 51 beinhaltet mindestens eine Lichtquelle 3; dies kann ein Laser, eine Lumineszenzdiode (LED) oder eine sonstige Lichtquelle sein. Der Lichtquelle 3 kann bei Bedarf ein (nicht dargestelltes) bspw. bündelndes optisches System nachgeschaltet sein. Das Empfängermodul 52' beinhaltet mindestens einen Lichtempfanger 20, bspw. eine Photodiode, eine CCD-Kamera, ein positionsempfindliches Empfangselement (PSD) etc. Ein optisches System 13, bspw. eine fokussierende Linse oder ein Objektiv, kann ein abzubildendes (in Fig. 1 nicht eingezeichnetes) Objekt auf den Lichtempfänger 20 abbilden

Die Sensoreinheit 50 weist ausserdem ein optisches Ablenkelement 9 auf Wurde Licht aus der Richtung der Abtasteinrichtung 60 auf die Sensoreinheit 50 einfallen, so würde es durch das Ablenkelement 9 in zwei voneinander verschiedene Strahlengänge 53, 54 aufgeteilt. Ein erster Strahlengang 53 ist durch einen ersten räumlich begrenzten Teil 55 des Lichtes definiert und ein zweiter Strahlengang 54 ist durch einen zweiten raumlich begrenzten Teil 56 des Lichtes definiert. Der erste Strahlengang 53 hat eine kleinere Querschnittfläche als der zweite Strahlengang 54 Das Sendermodul 51 liegt im ersten Strahlengang 53 und das Empfängermodul 52 im zweiten Strahlengang 54. In dieser Ausführungsform ist das Ablenkelement 9 als Planspiegel mit einer Öffnung 25 ausgebildet und derart angeordnet, dass vom Sendermodul 51 zum Ablenkeiement 9 laufendes Licht grösstenteils durch die Öffnung 25 zur Abtasteinrichtung 60 durchgelassen wird. Von der Abtasteinrichtung 60 ausserhalb des ersten Strahlengangs 53 einfallendes Licht wird hingegen grösstenteils zum Empfängermodul 52 reflektiert. Die Mantelfläche, welche die Öffnung 25 im Ablenkelement 9 umgibt, ist vorzugsweise parallel zur Ausbreitungsrichtung des auslaufenden Lichtes 53.

In Figur 2 ist schematisch eine andere Ausrührungsform der erfindungsgemässen Sensoreinheit 50 dargestellt. Hier ist das Ablenkelement 9 als kleiner Spiegel ausgebildet und derart angeordnet, dass vom Sedermodul 51 zum Ablenkelement 9 laufendes Licht 53 grösstenteils zur (in Fig. 2 nicht dargestellten) Abtasteinrichtung 60 reflektiert wird. Von der Abtasteinrichtung 60 ausserhalb des ersten Strahlengangs 53 einfallendes Licht 54 wird hingegen grösstenteils zum Empfängermodul 52 durchgelassen.

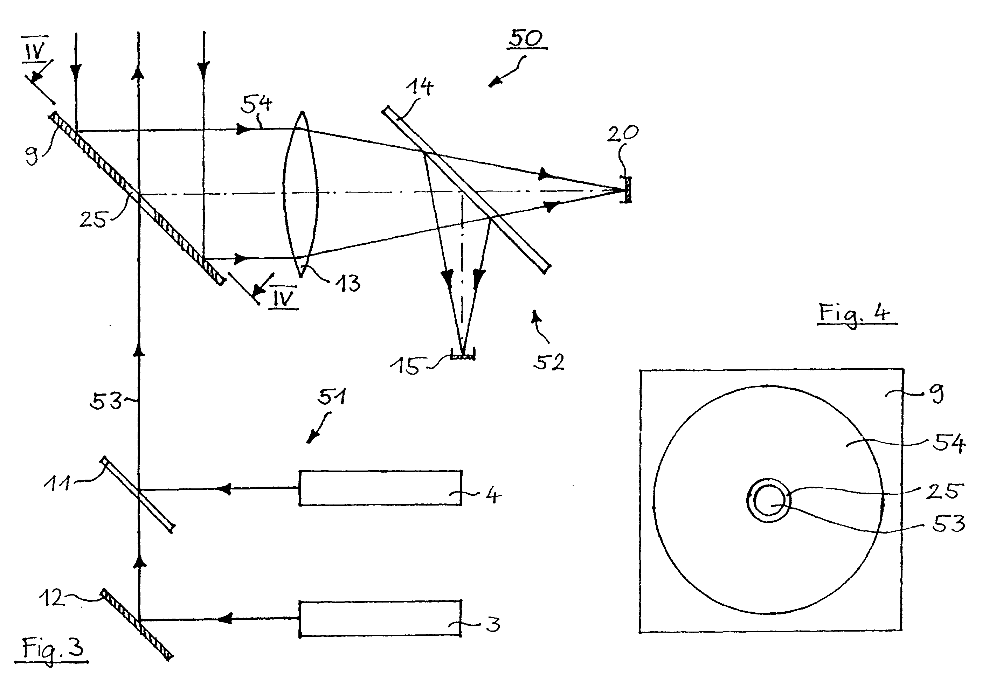

Figur 3 zeigt schematisch eine weitere Ausführungsform der erfindungsgemässen Sensoreinheit 50. Das Ablenkelement 9 entspricht demjenigen von Fig. 1. Diese Ausführungsform beinhaltet zwei Lichtquellen 3, 4, bspw zwei Laser. Ein erster Laser 3 sendet rotes Licht im Wellenlangenbereich zwischen 620 nm und 770 nm, bspw. 680 nm, aus, und ein zweiter Laser 4 sendet infrarotes Licht im Wellenlängenbereich über 770 nm, bspw. 830 nm, aus. Die beiden Laserstrahlen werden mittels eines Spiegels 12 und eines Strahlteilers 11 vereinigt. Das Empfängermodul 52 beinhaltet zwei Lichtempfanger 15, 20 und einen Strahlteiler 14 auf, mittels welchen ins Empfängermodul 52 einfallendes Licht 54 auf die Lichtempfänger 15, 20 aufgeteilt wird. Der Strahlteiler 14 kann dichroitische Eigenschaften haben, d. h. sein Reflexions/Transmissionsverhältnis kann wellenlängenabhängig sein.

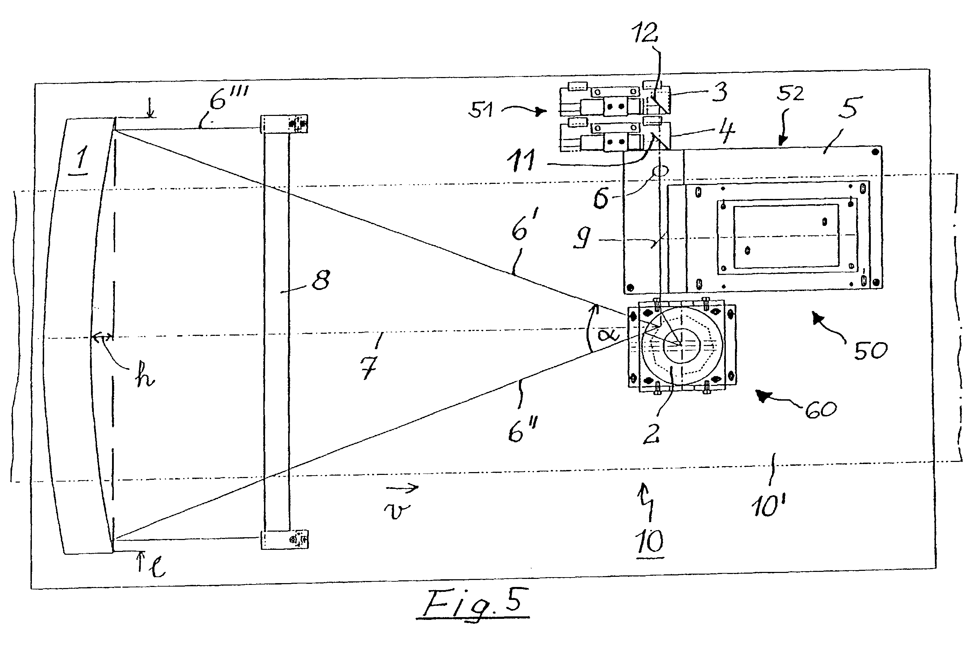

Figur 4 zeigt schematisch eine Draufsicht auf den Spiegel 9 mit Öffnung 25 von Fig. 3 entlang der Linie IV-IV Von der Abtasteinrichtung 60 herkommendes Licht 54, welches exakt mit dem zur Abtasteinrichtung 60 laufendem Licht 53 zusammenfällt, fällt nicht ins Empfängermodul 52. So wird ein Übersprechen effizient verhindert.

Gemäss der Figur 5 besteht das Grundprinzip der erfindungsgemässen Vorrichtung aus einem Hohlspiegel 1, der vorzugsweise als schmaler Streifen 1 aus einem Paraboloid ausgeschnitten ist und die Länge 1 und die Höhe h aufweist. Als Hohlspiegel 1 wird ein Parabolspiegel bevorzugt, weil dieser eine ideale, nahezu aberrationsfreie Abbildung liefert. Innerhalb des Brennpunktes des Parabolspiegels 1 ist ein Polygonspiegelrad 2, welches durch einen Motor 27 mit hoher Drehzahl gedreht wird, mit einer seiner Polygonflächen angeordnet dergestalt, dass vorzugsweise bei einem Winkel von 45 Grad der Normalen der Polygonfläche des Spiegelrades 2 zur optischen Achse 7 (Symmetrieachse) des Parabolspiegels 1 der Mittelpunkt der Polygonfläche genau im Brennpunkt des Parabolspiegels 1 zu liegen kommt. Zwei Laser 3, 4 erzeugen je einen Laserstrahl, wobei der eine Laser vorzugsweise im Wellenlängenbereich von ca.680 nm, also im Rotlichtbereich, und der andere Laser vorzugsweise im Wellenbereich von 830 nm, also im Infrarotlichtbereich, arbeitet. Die Laserstrahlen werden über Spiegel 11, 12 umgelenkt und zu einem gemeinsamen Stahl 6 zusammengeführt. Zu diesem Zweck ist der in Figur 1 gezeigte Spiegel 11 durchlässig für den Laserstrahl des dahinter gelegenen Lasers 3. Die zusammengeführten Laserstrahlen 6 durchqueren einen weiteren Spiegel 9 durch ein Loch 25 innerhalb desselben und fallen auf eine der ebenen Polygonflächen des sich drehenden Polygonspiegelrades 2. Abhängig von der Gestaltung des Polygonspiegelrades 2 und des Mittenabstandes desselben vom Parabolspiegel 1 führt das Polygonspiegelrad 2 die Laserstrahlen 6, 6', 6" in einem bestimmten vorgegebenen horizontalen Bildfeldwinkel α über den Parabolspiegel 1 in dessen Längsausdehnung 1 hinweg, wie es in Figur 5 zu ersehen ist.

Der horizontale Bildfeldwinkel α wird durch die Laserstrahlen 6', 6" begrenzt. Der jeweils vom Parabolspiegel 1 reflektierte Laserstrahl 6"' wird parallel zu sich selbst über die Langsausdehnung 1 des Parabolspiegels 1 hinweggeführt und bildet die Abtastzeile. Der reflektierte Laserstrahl 6"' wird auf einen schrag stehenden Spiegel 8 gelenkt und fallt auf die Oberfläche 10' eines abzutastenden Gegenstandes 10, beispielsweise ein mit der Geschwindigkeit v relativ zum Laser hinweglaufendes Holz. Auf diese Weise wird der Laserstrahl 6 bzw. die Laserstrahlen 6 aus den Lasern 3, 4, die auf das Objekt 10 fokussiert sind, unter einem gleichbleibenden Winkel bezüglich der Symmetrieachse 7 des Parabolspiegels 1 bzw. der Normalen der Transportoberfläche des Objektes 10 zum abzutastenden Objekt 10 längs der Abtastzeile 23, 24 geführt. Die Objektoberfläche wird mit einer telezentrischen Abbildung auf im Empfängermodul befindlichen Lichtempfänger abgebildet.

Das im Auftreffpunkt remittierte Laserlicht wird auf demselben Weg zurückgeführt, so dass ankommender Strahl und remittierter Strahl im wesentlichen zusammenfallen. Das Polygonspiegelrad 2 wirft das remittierte Strahlenbündel auf den Spiegel 9, der es umlenkt und einer Verarbeitungseinrichtung 5 zuführt, die das remittierte Strahlenbündel optisch und elektrisch auswertet, wozu auch ein echtzeitfähiger Rechner gehört.

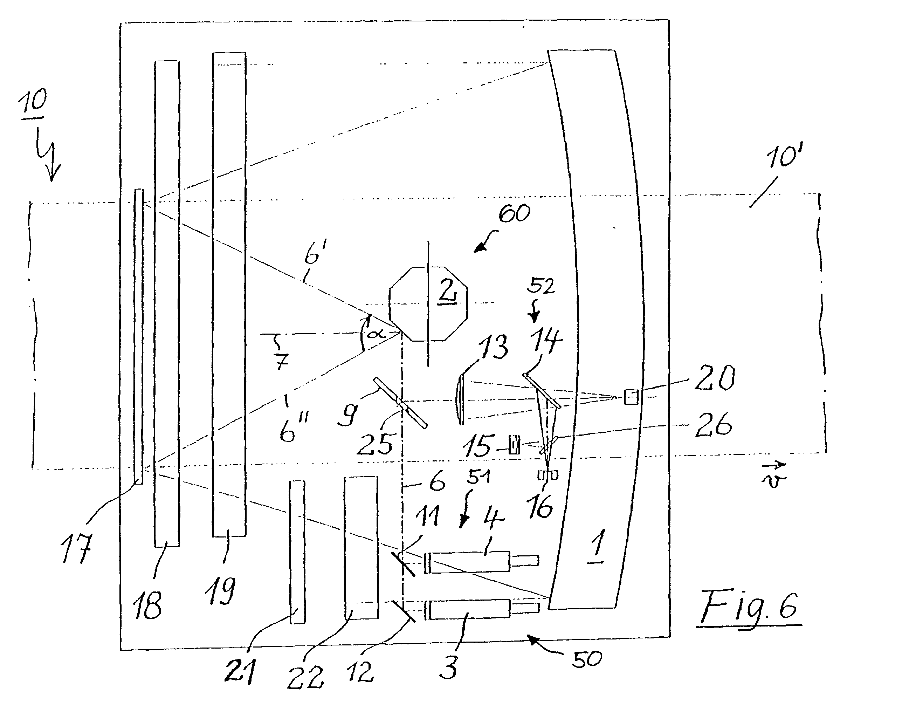

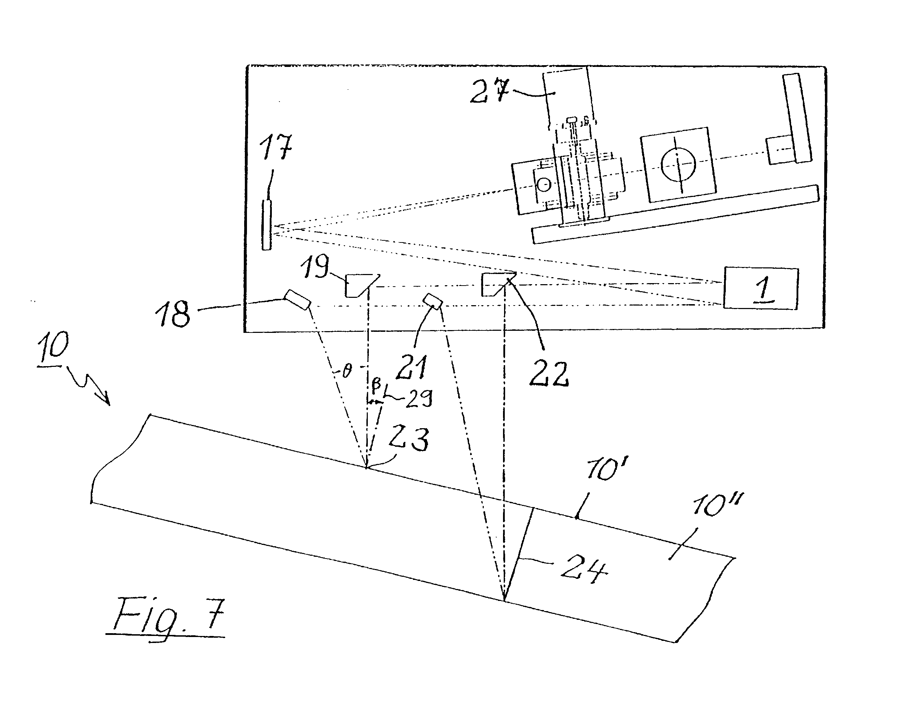

In den Figuren 6 und 7 ist eine technische Ausgestaltung der Vorrichtung dargestellt Die beiden Laser 3, 4 erzeugen Laserstrahlen 6, die über Spiegel 11, 12, zusammengeführt und durch ein Loch 25 innerhalb des Spiegels 9 auf das sich von einem Motor 27 angetriebene, mit hoher Geschwindigkeit drehende Polygonspiegelrad 2 geworfen werden, welches sich wiederum im Brennpunktsbereich - diesmal bezüglich eines länglichen, ebenen Spiegels 17 - des Parabolspiegels 1 befindet. Die beiden Laserstrahlen 6 werden vom Polygonspiegelrad 2 auf den Spiegel 17 geworfen, der die Laserstrahlen auf den Parabolspiegel 1 umlenkt, so dass der in den Figuren 6 und 7 gezeigte gefaltete Strahlengang entsteht. Der Parabolspiegel 1 bewirkt nun, dass die von ihm reflektierten Laserstrahlen in sich parallel und somit unter gleichbleibendem Winkel bezüglich seiner Symmetrieachse 7 bzw bezüglich einer Normalen 29 der Transportoberfläche 10 des Objektes 10 auf die Oberfläche 10' geleitet werden können.

Dazu befinden sich im Strahlengang nach dem Parabolspiegel 1 gemäss Figur 7 zwei quer über die abzustastende Oberfläche 10' des abzutastenden Obejektes 10 verlaufende, ebene Spiegel 18, 19, welche die parallel in sich verlaufenden Laserstrahlen längs einer Abtastzeile 23 über die Oberfläche 10' hinwegführen. Es werden deshalb zwei Spiegel 18, 19 verwendet, um bezüglich der Auswertung im Lichtschnittverfahren (Triangulation) eine 3D-Darstellung des Abbildes gewinnen zu können. Falls auf die Information in Richtung der vertikalen Achse verzichtet werden kann, genügt prinzipiell ein Spiegel 19 zum Aufbau der Vorrichtung und zur Durchführung des Verfahrens.

Im folgenden werden anhand von Figur 7 Strahlengänge für den Fall ohne Lichtschnittverfahren und für den Fall mit Lichtschnittverfahren diskutiert. Der von der Sensoreinheit 50 ausgesandte und vom Parabolspiegel 1 reflektierte Lichtstrahl fällt über Spiegel 19 auf das Objekt 10 ein Dabei ist vorzugsweise der Einfallswinkel β bezüglich der Normalen 29 auf die Objektoberfläche 10' grösser als Null, d. h. der Lichteinfall erfolgt nicht senkrecht auf die Oberfläche 10'. Infolgedessen fällt direkt von der Oberfläche 10' reflektiertes Licht nicht auf den Spiegel 19 zurück; es wird also diffuse Remission an der Oberfläche 10' gemessen. Im Fall ohne Lichtschnittverfahren wird Licht gemessen, welches unter demselben Ausfallswinkel β über den Spiegel 19 auf demselben Weg wie das einfallende Licht in die Sensoreinheit 50 zurückläuft. Soll ein Lichtschnittvertahren zur Anwendung kommen, so wird die vertikale Ablage von Licht gemessen, welches unter einem konstanten Winkel θ bezüglich des einfallenden Lichtes diffus remittiert wird und über einen weiteren Spiegel 18 in die Sensoreinheit 50 zuruckfällt. Auch in diesem Fall läuft das Licht im wesentlichen auf demselben Weg wie das einfallende Licht in die Sensoreinheit 50 zurück. Dabei bestimmt der Winkel θ die Auflösung der 3D-Messung. Je grösser der Winkel θ, umso empfindlicher kann das 3D-Profil vermessen werden. Ein bevorzugter Wert für den Winkel θ ist θ = 15.5° ± 1.5°. In einer Variante des Verfahrens kann auch Licht sowohl über Spiegel 19 als auch über Spiegel 18 - oder sogar auf mehr als zwei Lichtwegen - auf das Objekt 10 eingestrahlt und die entsprechenden diffus remittierten Lichtanteile detektiert werden.

Zwei weitere Spiegel 21, 22, die in der Draufsicht seitlich von den Spiegeln 18, 19 und gegebenenfalls in unterschiedlichen Ebenen angeordnet sind, dienen dazu, gleichzeitig die Laserstrahlen uber eine Seitenfläche 10" des Objektes 10 längs einer weiteren Abtastzeile 24 hinwegzuführen und ein Abbild - auch als 3D-Bild - zu gewinnen, so dass gleichzeitig zwei unter einem vorgegebenen Winkel zueinander geneigte Oberflächen 10', 10" gescannt werden können, die im gezeigten Beispiel um 90 Grad zueinander geneigt sind. Die remittierten Lichtstrahlen gelangen auf demselben Weg zurück und fallen unter dem horizontalen Bildfeldwinkel α auf den Spiegel 9, von dem sie zu einem Objektiv 13 hin abgelenkt werden.

Im Strahlengang des Objektivs 13 befindet sich ein dichroitischer Spiegel 14, der für die Infrarotstrahlung des remittierten Laserlichts des einen Lasers durchlässig ist, jedoch die remittierte Rotlichtstrahlung des anderen Lasers ablenkt Nach dem Spiegel 14 befindet sich in der Bildebene des Objektivs 13 sich ein Empfänger 20, dessen Empfangssignale als 3D-Information genutzt werden. Mit dieser Information kann im Rechner ein Relief-Bild berechnet werden, welches die Erkennung von Tiefenanderungen des zu prufenden Objektes erlaubt. Vorzugsweise wird als Sensoreiement 20 für den 3D-Kanal ein positionsempfindliches opto-elektrisches Empfangselement, insbesondere ein hochgeschwindigkeitsfähiges PSD-Sensorelement, verwendet, welches die Positionsabweichung des über den Spiegel 18 bzw. 21 geleiteten Laserstrahls gegenüber der Nullage detektiert.

Der Rotlichtanteil der remittierten Laserstrahlen wird durch den dichroitischen Spiegel 14 abgelenkt und fällt auf einen Teilerspiegel 26, der diesen Strahlanteil nochmals in zwei Kanäle aufteilt, in denen lichtempfindliche Sensoren 15, 16 angeordnet sind. Der eine Kanal wird als sogenannter direkter Rot-Sensor betrieben und liefert ein Graustufenbild, wobei hier das Abbild des direkten Lichtpunktes bzw. Lichtflecks auf dem Objekt ausgewertet wird. Zu diesem Zweck werden durch eine Blende die Keulen des Scatter-Effektes ausgeblendet. Der andere Kanal ist der sogenannte Scatter-Kanal und dient zur Auswertung des eigentlichen Scatterbildes und somit bei Holz der Keulen, die sich an den direkten Lichtfleck anschliessen. Dazu wird der Mittenpunkt bzw. Mittenfleck, der ja in dem anderen Kanal ausgewertet wird, mittels spezieller Raumfilter 30 im Scatterkanal ausgeblendet und das Abbild der verbleibenden Keulen zum Beispiel auf eine Vierquadranren-Diode geworfen Aus dem Verhältnis der beiden Keulen zueinander kann dann deren Lage zueinander und bezüglich der Transportrichtung errechnet und somit bei Holz zum Beispiel der Faserverlauf oder Befallstellen mit Blaufäule oder Rotfäule bestimmt werden. Die Auswertung der remittierten Laserstrahlung erfolgt somit dergestalt, dass die energetische und/oder ortsabhängige Verteilung der remittierten Strahlung in unterschiedliche elektrische Signale gewandelt wird.

Mittels eines echtzeitfähigen Rechners können anschliessend die Kanäle ausgewertet und die entstehenden Bilder auf dem Monitor angezeigt werden. Ebenso ist es moglich, die Signale aus den drei Kanalen in Farbwerte umzurechnen, um so auch ein farbiges Abbild zu erzeugen

Es ist auch denkbar, die remittierte Laserstrahlung auf eine CCD-Kamera zur Auswertung aufzugeben

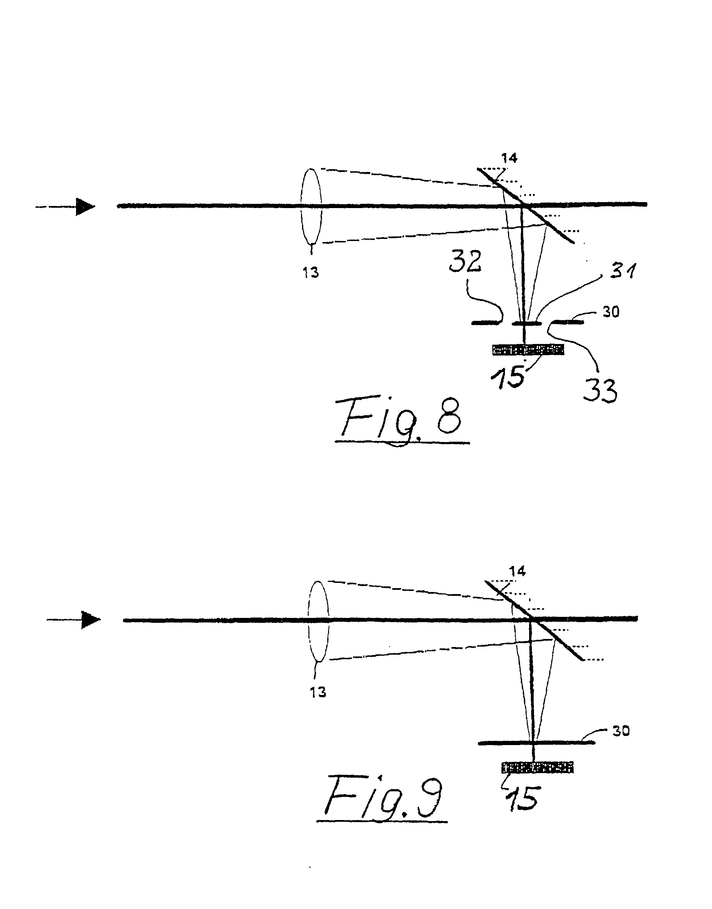

Die Figuren 8 und 9 zeigen einerseits eine Ansicht des Empfängermoduls 15 mit einem Raumfilter 30 senkrecht zum Parabolspiegel 1 im Scatterkanal mit Objektiv 13 und Spiegel 14 und andererseits eine Ansicht desselben Empfängermoduls 15 mit demselben Raumfilter 30 parallel zum Parabolspiegel 1 im Scatterkanal Man erkennt die räumliche Ausblendung einerseits des Mittenflecks durch eine Mittelplatte 31, wobei die Keulen durch Schlitze 32, 33 hindurch auf den Lichtempfänger 15 fallen.

Die Vorrichtung und das Verfahren sind insbesondere dazu geeignet, die Oberfläche eines Objektes, insbesondere flächiger Objekte wie Hölzer, Kacheln, Textilien, Gläsern, Kunststoffoberflächen, Folien, Siliziumscheiben, Kartonagen u. a. m. zwecks Feststellung von Oberflächenmerkmalen wie Rissen, Löchern, Überhöhungen oder Vertiefungen, zu inspizieren und nach Gütekriterien zu bewerten. Insbesondere sind die Vorrichtung und das Verfahren für den Einsatz der Inspektion von Holzern geeignet, weil sie zum ersten Mal direkt den Scatter-Effekt bei Holz auszuwerten imstande sind und eine selektive optische Kontrastanhebung bei verschiedensten Oberflächenfehlern liefern oder eine Unterscheidung von sagerauhen Hölzern ermöglichen. Ebenso werden Blaufäule wie Verschmutzungen oder Wurmfrass oder Risse sehr gut sichtbar gemacht. Die Nützlichkeit der Erfindung besteht insbesondere darin, dass mit ihr in Echtzeit verschiedene Oberflächenmerkmale gemessen werden können, wie
a) die Intensitätsverteilung des diffus reflektierten Laserlichts und/oder
b) die Verteilung der Intensitat des durch lokale Dichteanderungen gestreuten Laserlichts (Tracheid-Effekt), was durch Raumfilter im Scatter-Kanal beobachtet wird und/oder
c) das Höhenprofil (3D-Kanal) der Oberfläche, welches mittels eines Triangulationsverfahrens gemessen wird und/oder
d) doppelbrechende Eigenschaften, welche durch polarisationsabhängige Detektionsverfahren vermessen werden, beispielsweise mittels eines Analysators parallel und antiparallel zur Oberflächenrichtung.

## Patentansprüche

1. Vorrichtung zur Inspektion einer Oberfläche (10',10") eines Objektes (10) zwecks Feststellung von Oberflächenmerkmalen, beinhaltend
eine Abtasteinrichtung (60) und
eine optische Sensoreinheit (50) zum Senden von Licht (53) in die Abtasteinrichtung (60) und zum Empfangen von aus der Abtasteinrichtung (60) einfallendem Licht (54), mit
einem Licht (53) aussendenden Sendermodul (51),
einem Licht (54) empfangenden Empfängermodul (52), und
einem optischen Ablenkelement (9), durch welches von der Abtasteinrichtung (60) einfallendes Licht in zwei voneinander verschiedene Strahlengänge aufteilbar ist, wovon
ein erster Strahlengang (53) durch einen ersten räumlich begrenzten Teil (55) des einfallenden Lichtes definiert ist und
ein zweiter Strahlengang (54) durch einen zweiten räumlich begrenzten
Teil (56) des einfallenden Lichtes definiert ist, wobei
der erste räumlich begrenzte Teil (55) eine kleinere Querschnittfläche aufweist als der zweite räumlich begrenzte Teil (56),
das Sendermodul (51) im ersten Strahlengang (53) und
das Empfängermodul (52) im zweiten Strahlengang (54) liegt,
wobei die Abtasteinrichtung (60) ein von der Sensoreinheit (50) beleuchtbares Lichtumlenkelement (2) mit zeitabhängigem Umlenkwinkel beinhaltet,
**dadurch gekennzeichnet, dass**
die Abtasteinrichtung (60) einen Hohlspiegel (1) beinhaltet, in dessen Brennpunkt das Lichtumlenkelement (2) angeordnet ist, so dass
von der Sensoreinheit (50) ausgesandtes Licht unter einem gleichbleibenden Winkel bezüglich der Symmetrieachse (7) des Hohlspiegels (1) längs einer Abtastzeile (23, 24) über das Objekt (10) sowie
vom Objekt (10) remittiertes Licht von der Abtasteinrichtung (60) durch das gleiche Abbildungssystem wie das ausgesandte Licht in die Sensoreinheit (50) führbar ist, und dass
der Hohlspiegel (1) bezüglich der Oberfläche (10',10") und des Empfängermoduls (52) derart angeordnet ist, dass die Oberfläche (10',10") telezentrisch in das Empfängermodul (52) abbildbar ist, wobei das Lichtumlenkelement (2) einen begrenzenden Bildfeldwinkel (α) definiert.

2. Vorrichtung nach Anspruch 1, **dadurch gekennzeichnet, dass** das Ablenkelement (9) als Spiegel mit einer Öffnung (25) ausgebildet und derart angeordnet ist, dass vom Sendermodul (51) zum Ablenkelement (9) laufendes Licht (53) grösstenteils durch die Öffnung (25) zur Abtasteinrichtung (60) durchgelassen wird.

3. Vorrichtung nach Anspruch 1, **dadurch gekennzeichnet, dass** das Ablenkelement (9) als Spiegel ausgebildet und derart angeordnet ist, dass vom Sendermodul (51) zum Ablenkelement (9) laufendes Licht (53) grösstenteils durch den Spiegel (9) zur Abtasteinrichtung (60) reflektiert wird.

4. Vorrichtung nach einem der Ansprüche 1-3, **dadurch gekennzeichnet, dass** das Sendermodul (51) mehrere Lichtquellen (3, 4) beinhaltet, deren Licht (6) verschiedene Wellenlängen aufweist.

5. Vorrichtung nach Anspruch 4, **dadurch gekennzeichnet, dass** eine erste Lichtquelle (3) Licht im Wellenlängenbereich zwischen 620 nm und 770 nm und eine zweite Lichtquelle (4) Licht im Wellenlängenbereich über 770 nm aussendet.

6. Vorrichtung nach einem der Ansprüche 1-5, **dadurch gekennzeichnet, dass** das Empfängermodul (52) mindestens einen Lichtempfänger (15, 16, 20) und ein optisches System (13) beinhaltet, wobei das optische System (13) derart zwischen dem Ablenkelement (9) und dem mindestens einen Lichtempfänger (15, 16, 20) angeordnet ist, dass sich der mindestens eine Lichtempfänger (15, 16, 20) in der Brennebene des optischen Systems (13) befindet.

7. Vorrichtung nach Anspruch 6, **dadurch gekennzeichnet, dass** das Empfängermodul (52) mehrere Lichtempfänger (15, 16, 20) und mindestens einen Strahlteiler (14, 26) beinhaltet, wobei mittels des mindestens einen Stahlteilers (14, 26) ins Empfängermodul (52) einfallendes Licht (54) auf die Lichtempfänger (15, 16, 20) aufteilbar ist.

8. Vorrichtung nach Anspruch 7, **dadurch gekennzeichnet, dass** mindestens ein Strahlteiler (14, 26) ein wellenlängenabhängiges Reflexions-/Transmissions-Verhältnis aufweist.

9. Vorrichtung nach einem der Ansprüche 6-8, **dadurch gekennzeichnet, dass** sie einen Lichtempfänger (15) mit einem vorgeschalteten Raumfilter (30) zum Ausblenden des direkt remittierten Lichtpunkts bzw. -flecks und/oder einen Lichtempfänger (16) mit einer vorgeschalteten Blende zum Ausblenden von Keulen des Scatter-Effektes enthält.

10. Vorrichtung nach Anspruch 9, **dadurch gekennzeichnet, dass** sie zwei Lichtempfänger (15) mit je einem vorgeschalteten Raumfilter (30) enthält, wobei die Raumfilter (30) orthogonal zueinander angeordnet sind, um die Richtungsabhängigkeit von tracheid-gestreutem Licht zu messen.

11. Vorrichtung nach einem der Ansprüche 1-10, **dadurch gekennzeichnet, dass** das Empfängermodul (52) mindestens eine CCD-Kamera und/oder mindestens ein positionsempfindliches Empfangselement (PSD) beinhaltet.

12. Vorrichtung nach einem der Ansprüche 1-11, **dadurch gekennzeichnet, dass** das Lichtumlenkelement (2) ein drehbares Polygonspiegelrad ist.

13. Vorrichtung nach einem der Ansprüche 1-12, **dadurch gekennzeichnet, dass** der Hohlspiegel (1) ein Segment, insbesondere ein Streifen mit parallelen Schnittflächen, aus einem Paraboloid ist.

14. Vorrichtung nach einem der Ansprüche 1-13, **dadurch gekennzeichnet, dass** zur Gewinnung eines 3D-Profils durch Lichtschnittverfahren (Triangulation) unter einem konstanten Winkel (θ) bezüglich des einfallenden Strahls vom Objekt (10) remittiertes Licht zur Sensoreinheit (50) zurückführbar ist.

15. Vorrichtung nach Anspruch 14, **dadurch gekennzeichnet, dass** zur Gewinnung eines telezentrischen 3D-Profils durch Lichtschnittverfahren (Triangulation) die Sensoreinheit (50) ein hochgeschwindigkeitsfähiges positionsempfindliches Empfangselement (PSD) (20) enthält, um das Oberflächenprofil (10',10") durch die Ablage des remittierten Lichtes senkrecht zur Objektoberfläche (10') mittels telezentrischer Abbildung zu vermessen.

16. Vorrichtung nach einem der Ansprüche 1-15, **dadurch gekennzeichnet, dass** das Objekt (10) relativ zur Sensoreinheit (50) bewegbar ist.

17. Verfahren zur Inspektion der Oberfläche (10',10") eines Objektes (10) zwecks Feststellung von Oberflächenmerkmalen, wobei
Licht von einer Sensoreinheit (50) zu einer Abtasteinrichtung (60) gesendet wird und
das ausgesandte Licht (6) auf ein Lichtumlenkelement (2) mit zeitabhängigem Umlenkwinkel geführt und von diesem umgelenkt wird,
**dadurch gekennzeichnet, dass**
das vom Lichtumlenkelement (2) umgelenkte Licht von einem Hohlspiegel (1), in dessen Brennpunkt das Lichtumlenkelement (2) angeordnet ist, auf das Objekt (10) fokussiert, unter einem gleichbleibenden Winkel bezüglich der Symmetrieachse (7) des Hohlspiegels (1) längs einer Abtastzeile (23, 24) über das Objekt (10) geführt und vom Objekt (10) remittiertes durch das gleiche Abbildungssystem wie das ausgesandte Licht in die Sensoreinheit (50) zurückgeführt wird, und dass
die Objektoberfläche (10',10") durch den Hohlspiegel (1) telezentrisch in die Sensoreinheit (50) abgebildet wird, wobei das Lichtumlenkelement (2) wobei das Lichtumlenkelement (2) einen begrenzenden Bildfeldwinkel (α) definiert.

18. Verfahren nach Anspruch 17, **dadurch gekennzeichnet, dass** zur Gewinnung eines 3D-Profils durch Lichtschnittverfahren (Triangulation) unter einem konstanten Winkel (θ) bezüglich des einfallenden Strahls vom Objekt (10) remittiertes Licht zur Sensoreinheit (50) zurückgeführt wird.

19. Verfahren nach Anspruch 17 oder 18, **dadurch gekennzeichnet, dass** durch spezielle Raumfilter (30) der direkt remittierte Lichtpunkt bzw. -fleck ausgeblendet und nur das Abbild der verbleibenden Keulen ausgewertet wird.

20. Verfahren nach einem der Ansprüche 17-19, **dadurch gekennzeichnet, dass** in Echtzeit, vorzugsweise mit parallelen Prozessoren, verschiedene Oberflächenmerkmale gemessen werden.

21. Verfahren nach einem der Ansprüche 17-20, **dadurch gekennzeichnet, dass** das in die Sensoreinheit (50) einfallende Licht in mehrere Kanäle (15, 16, 20) aufgeteilt wird, die getrennt ausgewertet werden.

22. Verfahren nach Anspruch 21, **dadurch gekennzeichnet, dass** in die Sensoreinheit (50) einfallende Lichtanteile unterschiedlicher Wellenlänge voneinander getrennt werden, wobei aus den Lichtanteilen unterschiedlicher Wellenlänge verschiedene Oberflächenmerkmale, wie insbesondere das Höhenprofil in einem 3D-Kanal (20), die Reflektivität in einem Rotlicht-Kanal (16) sowie der Tracheid-Effekt in einem Scatter-Kanal (15), instantan mit hoher Wiederholungsrate aufgenommen werden.

23. Verfahren nach Anspruch 21 oder 22, **dadurch gekennzeichnet, dass** in die Sensoreinheit (50) einfallendes Licht, vorzugsweise ein Rotlichtanteil, in einen ersten und einen zweiten Lichtanteil aufgeteilt wird und diese zwei Lichtanteile auf zwei Lichtempfänger (15, 16) geführt werden, dass beim ersten Lichtanteil das Abbild der Keulen des Scatter-Effektes ausgeblendet, das Abbild des direkt remittierten Lichtpunkts bzw. -flecks auf dem Objekt ausgewertet und daraus ein Graustufenbild gewonnen wird, und/oder dass beim zweiten Lichtanteil durch spezielle Raumfilter (30) der direkt remittierte Lichtpunkt bzw. -fleck ausgeblendet und nur das Abbild der verbleibenden Keulen ausgewertet wird.

24. Verfahren nach Anspruch 22 oder 23, **dadurch gekennzeichnet, dass** in die Sensoreinheit (50) einfallende Lichtanteile unterschiedlicher Wellenlänge voneinander getrennt werden, wobei aus einem ersten Lichtanteil einerseits im Lichtschnittverfahren eine 3D-Information mit einem positionsempfindlichen Empfangselement (PSD) (20) gemessen und aus einem zweiten Lichtanteil die Intensitätsverteilung des Objektes (10) sowie die Oberflächenmerkmale des Objektes (Scatter-Effekt) mit optoelektrischen Sensorelementen (16, 17) gemessen werden, vorzugsweise in Echtzeit.

25. Verfahren nach einem der Ansprüche 17-24, **dadurch gekennzeichnet, dass** das in die Sensoreinheit (50) einfallende Licht zum Sichtbarmachen von dichteabhängigen Oberflächenanomalien dient und mittels eines Vierquadranten-Verfahrens ortsabhängig in der Ausprägung (Sₓ + S_{y})/S und in der Richtung arctan(Sₓ/S_{y}), gegebenenfalls in Kombination mit dem Triangulationsverfahren in einem 3D-Kanal auch höhenabhängig, in einem Echtzeitverfahren detektiert wird, dessen räumliche Auflösung nur durch die Fokussierbarkeit des Lichtes limitiert ist.

26. Verfahren nach einem der Ansprüche 17-25, **dadurch gekennzeichnet, dass** das Objekt (10) relativ zur Sensoreinheit (50) bewegt wird.

## Claims

1. Device for the inspection of a surface (10',10") of an object (10) for the purpose of determining surface characteristics, containing
a scanning device (60) and
an optical sensor unit (50) for the emitting of light (53) to the scanning device (60) and for the receiving of light (54) impinging from the scanning device (60), with
a sending module (51) emitting light (53),
a receiving module (52) receiving light (54), and
an optical deflecting element (9), through which light impinging from the scanning device (60) can be split-up into two beam paths differing from one another, of which
a first beam path (53) is defined by a first spatially limited part (55) of the impinging light and
a second beam path (54) is defined by a second spatially limited part (56) of the impinging light, wherein
the first spatially limited part (55) has a smaller cross sectional area than the second spatially limited part (56),
the emitting module (51) is located in the first beam path (53) and
the receiving module (52) is located in the second beam path (54),
wherein the scanning device (60) contains a light deflecting element (2) with a time-dependent deflection angle, which light deflecting element (2) can be illuminated by the sensor unit (50),
**characterized in that**
the scanning device (60) contains a concave mirror (1), in the focal point of which the light deflecting element (2) is located, so that
light emitted from the sensor unit (50) can be guided into the sensor unit (50) under a constant angle relative to the symmetry axis (7) of the concave mirror (1) and along a scanning line (23, 24) over the object (10) as well as light diffusely reflected from the object (10) emanating from the scanning device (60) can be guided into the sensor unit (50) through the same imaging system as the light emitted, and that
the concave mirror (1) is located in such a manner relative to the surface (10',10") and the receiving module (52), that the surface (10',10") can be telecentrically projected into the receiving module (52), wherein the light deflecting element (2) acts as a limiting angular field of view (α).

2. Device in accordance with claim 1, **characterized in that** the deflecting element (9) is designed as a mirror with an aperture (25) and is positioned in such a manner, that light (53) travelling from the emitting module (51) to the deflecting element (9) is to a greater extent left to pass through the aperture (15) to the scanning unit (60).

3. Device in accordance with claim 1, **characterized in that** the deflecting element (9) is designed as a mirror and is positioned in such a manner, that light (53) travelling from the emitting module (51) to the deflecting element (9) is to a greater extent reflected to the scanning device (60) by the mirror (9).

4. Device in accordance with one of the claims 1 - 3, **characterized in that** the emitting module (51) contains several light sources (3, 4), the light of which has different wave lengths.

5. Device in accordance with claim 4, **characterized in, that** a first light source (3) emits light in a wave length range between 620 nm and 770 nm and a second light source (4) emits light in a wave length range above 770 nm.

6. Device in accordance with one of the claims 1 - 5, **characterized in that** the receiving module (52) contains at least one light receiver (15, 16, 20) and an optical system (13),
wherein the optical system (13) is positioned between the deflecting element (9) and the at least one light receiver (15, 16, 20) in such a manner, that the at least one light receiver (15, 16, 20) is located in the focal plane of the optical system (13).

7. Device in accordance with claim 6, **characterized in that** the receiving module (52) contains several light receivers (15, 16, 20) and at least one beam splitter (14, 26),
wherein by means of the at least one beam splitter (14, 26) light (54) impinging on the receiving module (52) can be split up among the light receivers (15, 16, 20).

8. Device in accordance with claim 7, **characterized in that** at least one beam splitter (14, 26) has a reflection - / transmission ratio dependent on the wave length.

9. Device in accordance with one of the claims 6 - 8, **characterized in that** it contains a light receiver (15) with a spatial filter (30) ahead of it for blanking out the directly diffusely reflected light point, resp., -spot and / or a light receiver (16) with a diaphragm ahead of it for blanking out of light cones of the scatter effect.

10. Device in accordance with claim 9, **characterized in that** it contains two light receivers (15) with one spatial filter (30) ahead each of them, wherein the spatial filters (30) are positioned orthogonally relative to one another, in order to measure the directional dependence of tracheid- scattered light.

11. Device in accordance with one of the claims 1 - 10, **characterized in that** the receiving module (52) contains at least one CCD camera and / or at least one position-sensitive receiving element (PSD).

12. Device in accordance with one of the claims 1 - 11, **characterized in that** the light deflecting element (2) is a rotatable polygonal mirror wheel.

13. Device in accordance with one of the claims 1 - 12, **characterized in that** the concave mirror (1) is a segment, in particular a strip with parallel cut edges, out of a paraboloid.

14. Device in accordance with one of the claims 1 - 13, **characterized in that** for the obtaining of a 3D profile by a triangulation process light diffusely reflected from the object (10) under a constant angle (θ) relative to the impinging beam can be guided back to the sensor unit (50).

15. Device in accordance with claim 14, **characterized in that** for obtaining of a telecentric 3D profile by means of a triangulation process the sensor unit (50) contains a position-sensitive receiving element (PSD) (20) capable of high speed, in order to measure the surface profile (10',10") by deposition of the diffusely reflected light vertically to the object surface (10') by means of telecentric projection.

16. Device in accordance with one of the claims 1 - 15, **characterized in that** the object (10) can be moved relative to the sensor unit (50).

17. Process for the inspection of the surface (10',10") of an object (10) for the purpose of determining surface characteristics, wherein
light from a sensor unit (50) is transmitted to a scanning device (60) and
the emitted light (6) is guided to a deflecting element (2) with a time-dependent deflection angle and is deflected by it,
**characterized in that**
the light deflected by the deflecting element (2) is focussed on the object by a concave mirror (1), in the focal point of which the light deflecting element (2) is positioned, and is guided under a constant angle relative to the symmetry axis (7) of the concave mirror (1) along a scanning line (23, 24) over the object (10), and light diffusely reflected from the object (10) is guided back to the sensor unit (50) through the same imaging system as the emitted light, and that the object surface (10',10") is telecentrically projected into the sensor unit (50) by the concave mirror (1), wherein the light deflecting element (2) acts as a limiting angular field of view (α).

18. Procedure in accordance with claim 17, **characterized in that** for the obtaining of a 3D profile by means of a triangulation process light diffusely reflected from the object (10) under a constant angle (θ) relative to the impinging beam is guided back to the sensor unit (50).

19. Process in accordance with claim 17 or 18, **characterized in that** by means of special spatial filters (30) the directly reflected light point, resp., - spot is blanked out and only the image of the remaining light cones is evaluated.

20. Process in accordance with one of the claims 17 - 19, **characterized in that** in real time, in preference with parallel processors, various surface characteristics are measured.

21. Process in accordance with one of the claims 17 - 20, **characterized in that** the light impinging on the sensor unit (50) is split-up into several channels, which are separately evaluated.

22. Process in accordance with claim 21, **characterized in that** light portions of differing wave length impinging on the sensor unit (50) are separated from one another, wherein from the light portions various surface characteristics, such as in particular the elevation profile in a 3D channel (20), the reflectivity in a red light channel (16) as well as the Tracheid effect in a scatter channel (15), are recorded instantaneously with a high repetition rate.

23. Process in accordance with claim 21 or 22, **characterized in that** light impinging on the sensor unit (50), in preference a red light portion, is split-up into a first and a second light portion and that these two light portions are guided to two light receivers (15, 16), that in the case of the first light portion the image of the light cones of the scatter effect are blanked out, the image of the directly diffusely reflected light point, resp., - spot on the object is evaluated and from it a grey-scale image is obtained, and / or that in the case of the second light portion by means of special spatial filters (30) the directly diffusely reflected light point, resp., - spot is blanked out and only the image of the remaining light cones is evaluated.

24. Process in accordance with claim 22 or 23, **characterized in that** light portions of differing wave length impinging on the sensor unit (50) are separated from one another, wherein from a first light portion on the one hand in a triangulation process 3D information is measured by means of a position-sensitive receiving element (PSD) (20) and from a second light portion the intensity distribution of the object (10) as well as the surface characteristics (scatter effect) are measured with opto-electrical sensor elements (16, 17), preferably in real time.

25. Process in accordance with one of the claims 17 - 24, **characterized in that** light impinging on the sensor unit (50) serves to make visible density dependent surface anomalies and by means of a four-quadrant process in function of the position in the form (Sₓ + S_{y})/S and in the direction arctan (Sₓ/S_{y}), if necessary in combination with the triangulation process in a 3D channel also in function of the elevation, light impinging on the sensor unit (50) is detected in a real time process, the spatial resolution of which is limited only by the focussing ability of the light.

26. Process in accordance with one of the claims 17 - 25, **characterized in that** the object (10) is moved relative to the sensor unit (50).

## Revendications

1. Dispositif pour inspecter une surface (10', 10") d'un objet (10), pour la détermination de caractéristiques de surface, comprenant,
un dispositif de balayage (60) et
une unité de capteur optique (50) destinée à envoyer de la lumière (53) dans le dispositif de balayage (60) et à recevoir de la lumière incidente (54) issue du dispositif de balayage (60), qui comprend elle-même
un module émetteur (51) qui émet de la lumière (53),
un module récepteur (52) qui reçoit de la lumière (54) et
un élément déflecteur optique (9) par lequel la lumière incidente issue du dispositif de balayage (60) peut être divisée en deux chemins de rayons différents l'un de l'autre, dont
un premier chemin de rayons (53) est défini par une première partie (55), limitée dans l'espace, de la lumière incidente et
un deuxième chemin de rayons (54) est défini par une deuxième partie (56), limitée dans l'espace, de la lumière incidente, dans lequel
la première partie (55) limitée dans l'espace présente une plus petite surface de section que la deuxième partie (56) limitée dans l'espace,
le module émetteur (51) se trouve dans le premier chemin de rayons (53) et le module récepteur (52) dans le deuxième chemin de rayons (54),
le dispositif de balayage (60) comprenant un élément (2) de déviation de la lumière, pouvant être éclairé par l'unité capteur (50) et possédant un angle de déviation fonction du temps,
**caractérisé en ce que**
le dispositif de balayage (60) comprend un miroir concave (1) au foyer duquel l'élément de déviation de lumière (2) est disposé, de sorte que la lumière émise par l'unité capteur (50) peut être dirigée le long d'une ligne de balayage (23, 24) sur l'objet (10) en formant un angle constant avec l'axe de symétrie (7) du miroir concave (1),
et la lumière réémise par l'objet (10) peut être dirigée par le dispositif de balayage (60) dans l'unité capteur (50) à travers le même système de formation d'image que la lumière émise, et **en ce que**
le miroir concave (1) est disposé par rapport à la surface (10', 10") et par rapport au module récepteur (52) de telle manière que l'image de la surface (10', 10") puisse se former dans le module récepteur (52) de façon télécentrique, l'élément de déviation de lumière (2) définissant un angle de champ d'image limitatif (a).

2. Dispositif selon la revendication 1, **caractérisé en ce que** l'élément déflecteur (9) est constitué par un miroir présentant une ouverture (25) et est disposé de telle manière que la lumière (53) qui va du module émetteur (51) à l'élément déflecteur (9) soit transmise en majeure partie vers le dispositif de balayage (60) à travers l'ouverture (25).

3. Dispositif selon la revendication 1, **caractérisé en ce que** l'élément déflecteur (9) est constitué par un miroir et est disposé de manière que la lumière (53) qui va du module émetteur (51) à l'élément déflecteur (9) soit en majeure partie réfléchie vers le dispositif de balayage (60) par le miroir (9).

4. Dispositif selon une des revendications 1-3, **caractérisé en ce que** le module émetteur (51) comprend plusieurs sources de lumière (3, 4) dont la lumière (6) présente différentes longueurs d'onde.

5. Dispositif selon la revendication 4, **caractérisé en ce qu'**une première source de lumière (3) émet de la lumière dans la gamme de longueurs d'onde comprise entre 620 nm et 770 nm et une deuxième source de lumière (4) émet de la lumière dans une gamme de longueurs d'onde de plus de 770 nm.

6. Dispositif selon une des revendications 1-5, **caractérisé en ce que** le module récepteur (52) comprend au moins un récepteur de lumière (15, 16, 20) et un système optique (13), le système optique (13) étant disposé entre l'élément déflecteur (9) et l'au moins un récepteur de lumière (15, 16, 20) de telle manière que l'au moins un récepteur de lumière (15, 16, 20) se trouve dans le plan focal du système optique (13).

7. Dispositif selon la revendication 6, **caractérisé en ce que** le module récepteur (52) comprend plusieurs récepteurs de lumière (15, 16, 20) et au moins un diviseur de faisceau (14, 26), la lumière (54) qui tombe dans le module récepteur (52) pouvant être répartie sur les récepteurs de lumière (15, 16, 20) au moyen de l'au moins un diviseur de faisceau (14, 26).

8. Dispositif selon la revendication 7, **caractérisé en ce qu'**au moins un diviseur de faisceau (14, 26) possède un rapport réflexion-transmission qui est fonction de la longueur d'onde.

9. Dispositif selon une des revendications 6 à 8, **caractérisé en ce qu'**il comprend un récepteur de lumière (15) ayant un filtre spatial (30) placé en amont, destiné à supprimer le point lumineux ou la tache lumineuse directement réémis et/ou un récepteur de lumière (16) muni d'un diaphragme placé en amont pour supprimer les lobes de l'effet de diffusion.

10. Dispositif selon la revendication 9, **caractérisé en ce qu'**il comprend deux récepteurs de lumière (15) ayant chacun un filtre spatial (30) placé en amont, les filtres spatiaux (30) étant disposés orthogonalement entre eux, pour mesurer la relation de dépendance directionnelle de la lumière diffusée en trachéide.

11. Dispositif selon une des revendications 1-10, **caractérisé en ce que** le module récepteur (52) comprend au moins une caméra CCD et/ou au moins un élément de réception sensible à la position (PSD).

12. Dispositif selon une des revendication 1-11, **caractérisé en ce que** l'élément de déviation de la lumière (2) est une roue rotative à miroirs polygonaux.

13. Dispositif selon une des revendications 1-12, **caractérisé en ce que** le miroir concave (1) est un segment d'un paraboloïde, en particulier une tranche de paraboloïde à surfaces de coupe parallèles.

14. Dispositif selon une des revendications 1-13, **caractérisé en ce que**, pour obtenir un profil 3D par le procédé de la coupe optique (triangulation), la lumière réémise par l'objet (10) en formant un angle constant (θ) par rapport au faisceau incident peut être renvoyée à l'unité capteur (50).

15. Dispositif selon la revendication 14, **caractérisé en ce que**, pour obtenir un profil 3D télécentrique par le procédé de coupe optique (triangulation), l'unité capteur (50) renferme un élément de réception sensible à la position (PSD) (20) capable d'une haute vitesse, pour mesurer le profil de surface (10', 10") par la réception de la lumière réémise perpendiculairement à la surface (10') de l'objet au moyen d'une formation d'image télécentrique.

16. Dispositif selon une des revendications 1-15, **caractérisé en ce que** l'objet (10) est mobile par rapport à l'unité capteur (50).

17. Procédé pour l'inspection de la surface (10', 10") de l'objet (10) pour la détermination de caractéristiques de surface, dans lequel
de la lumière issue d'une unité capteur (50) est envoyée à un dispositif de balayage (60) et
la lumière émise (6) est dirigée sur un élément de déviation de la lumière (2) possédant un angle de déviation fonction du temps et est déviée par cet élément ;
**caractérisé en ce que**
la lumière déviée par l'élément de déviation de la lumière (2) est focalisée sur l'objet (10) par un miroir concave (1) au foyer duquel l'élément de déviation de la lumière (2) est disposé, est dirigée le long d'une ligne de balayage (23, 24) sur l'objet (10) en faisant un angle constant avec l'axe de symétrie ( 7) du miroir concave (1) et la lumière réémise par l'objet (10) est renvoyée dans l'unité capteur (50) par le même système de formation d'image que la lumière émise, et **en ce que**
l'image de la surface (10', 10") de l'objet se forme dans l'unité capteur (50) au moyen du miroir concave (1) de façon télécentrique, l'élément de déviation de la lumière (2) définissant un angle de champ d'image limitatif (α).

18. Procédé selon la revendication 17, **caractérisé en ce que**, pour obtenir un profil 3D par le procédé de coupe optique (triangulation), la lumière réémise par l'objet (10) est renvoyée vers l'unité capteur (50) en formant un angle constant (θ) avec le rayon incident.

19. Procédé selon la revendication 17 ou 18, **caractérisé en ce que** le point lumineux ou la tache lumineuse réémis directement est supprimée par le filtre spatial spécial (30) et seule l'image des lobes subsistants est analysée.

20. Procédé selon une des revendications 17-19, **caractérisé en ce que** diverses caractéristiques de surface sont mesurées en temps réel, de préférence au moyen de processeurs parallèles.

21. Procédé selon une des revendications 17-20, **caractérisé en ce que** la lumière qui tombe dans l'unité capteur (50) est divisée en plusieurs canaux (15, 16, 20) qui sont analysés séparément

22. Procédé selon la revendication 21, **caractérisé en ce que** les fractions de lumière de différentes longueurs d'onde qui tombent dans l'unité capteur (50) sont séparées les unes des autres et, à partir des fractions de lumière possédant différentes longueurs d'onde, diverses caractéristiques de surface sont enregistrées instantanément avec une haute cadence de répétition comme, en particulier, le profil en hauteur dans un canal 3D (20), la réflectivité dans un canal de lumière rouge (16) et l'effet trachéide dans un canal de diffusion (15).

23. Procédé selon une des revendications 21 ou 22, **caractérisé en ce que** la lumière qui tombe dans l'unité capteur (50), de préférence une fraction de lumière rouge, est divisée en une première et une deuxième fractions de lumière et ces deux fractions de lumière sont dirigées vers deux récepteurs de lumière (15, 16), **en ce que** pour la première fraction de lumière, l'image des lobes de l'effet de diffusion est supprimée, l'image du point lumineux ou de la tache lumineuse sur l'objet, directement réémise, est analysée et une image en gamme de gris en est tirée et/ou **en ce que** , pour la deuxième fraction de lumière, le point lumineux ou la tache lumineuse directement réémis est supprimé par des filtres spatiaux spéciaux (30) et seule l'image des lobes subsistants est analysée.

24. Procédé selon la revendication 22 ou 23, **caractérisé en ce que** les fractions de lumière de différentes longueurs d'onde qui tombent dans l'unité capteur (50) sont séparées les unes des autres et, à partir d'une première fraction de lumière, d'une part, une information 3D est mesurée dans le procédé de coupe optique avec un élément récepteur sensible à la position (PSD) (20) et, à partir d'une deuxième fraction de lumière, la répartition de l'intensité de l'objet (10) ainsi que les caractéristiques de surface de l'objet (effet de diffusion) sont mesurées avec des éléments capteurs opto- électriques (16, 17), de préférence en temps réel.

25. Procédé selon une des revendications 17-24, **caractérisé en ce que** la lumière qui tombe dans l'unité capteur (50) sert pour la visualisation d'anomalies de surface fonction de la densité et elle est détectée dans un procédé en temps réel au moyen d'un procédé à quatre quadrants, en fonction du lieu, dans le marquage (Sₓ + S_{y})/ S et dans la direction arctg (Sₓ/ S_{y}), éventuellement en combinaison avec le procédé de triangulation, dans un canal 3D, également en fonction de la hauteur, la résolution dans l'espace du procédé étant limitée uniquement par l'aptitude à la focalisation de la lumière.

26. Procédé selon une des revendications 17-25, **caractérisé en ce que** l'objet (10) se déplace par rapport à l'unité capteur (50).
